# EUROPEAN PATENT APPLICATION

(11) **EP 2 750 480 A2**
(43) Date of publication of application: **02.07.2014**
(21) Application number: 13182155.5
(22) Date of filing: 29.08.2013
(51) Int. Cl.: H05B 37/02, H02J 9/02

(54) **Illumination apparatus, illumination system, and illumination apparatus control method**

(30) Priority: 28.12.2012 JP 2012288731
(71) Applicant: Toshiba Lighting & Technology Corporation, Yokosuka-shi Kanagawa 237-8510 (JP); Kabushiki Kaisha Toshiba, Tokyo 105-8001 (JP)
(72) Inventor: Yamamoto, Takahiro, Tokyo 105-8001 (JP)
(74) Representative: Bokinge, Ole

(57) **Abstract**

An illumination apparatus (10) includes a determination unit (14a) that determines whether or not the supply of power from the system power supply is performed. In addition, the illumination apparatus (10) includes a control unit (14b) that performs control such that power is supplied to the light source (19A, 19B) from the battery (13) based on setting information of the light source when the determination unit (14a) determines that the supply of power from the system power supply is not performed.

## Description

### CROSS-REFERENCE TO RELATED APPLICATION

This application is based upon and claims the benefit of priority from Japanese Patent Application No. 2012-288731, filed December 28, 2012, the entire contents of which are incorporated herein by reference.

### FIELD

Embodiments described herein relate generally to an illumination apparatus, an illumination system, and an illumination apparatus control method.

### BACKGROUND

During a power failure right after the occurrence of a major earthquake, all functions of signs or street lights of the public transporting grid may stop. In this case, in a region where power supply recovery is delayed, there is a probability that rapid transfer of an evacuation order or securing of an evacuation route may be delayed.

Illumination apparatuses installed in the public road traffic network are operated by a supply of power from a system power supply, and thus there is a problem in that functions thereof stop immediately when the supply of power from the system power supply is cut off.

An object of embodiments is to provide an illumination apparatus, an illumination system, and an illumination apparatus control method, capable of maintaining functions of the illumination apparatus even if the supply of power from a system power supply is cut off.

### BRIEF DESCRIPTION OF THE DRAWINGS

FIG. 1 is a diagram illustrating an outline of an example of a first illumination system.
FIG. 2 is a diagram illustrating an example of a configuration of an illumination apparatus.
FIG. 3 is a diagram illustrating the supply of power to a night-light in normal time.
FIG. 4 is a diagram illustrating the supply of power to an evacuation light or a night-light when the supply of power from a system power supply is cut off.
FIG. 5 is a diagram illustrating discharging of a battery when the supply of power from the system power supply is cut off and an evacuation light is not lighted.
FIG. 6 is a diagram illustrating lighting control of a lighting control unit.
FIG. 7 is a flowchart illustrating an example of a flow of an illumination control process in the illumination apparatus according to an exemplary embodiment.

### DETAILED DESCRIPTION

An illumination apparatus according to an exemplary embodiment described below includes a light source. The apparatus according to the exemplary embodiment includes an illumination circuit that controls the light source. The illumination apparatus according to the exemplary embodiment includes a battery that is charged with power from a system power supply. The illumination apparatus according to the exemplary embodiment includes a determination unit that monitors power supplied from the system power supply and determines whether or not the supply of power from the system power supply is performed. The illumination apparatus according to the exemplary embodiment includes a control unit that controls supply of power to the light source from the battery based on setting information of the light source when the determination unit determines that the supply of power from the system power supply is not performed.

The control unit included in the illumination apparatus according to the exemplary embodiment supplies power to the illumination circuit and the battery from the system power supply when the determination unit determines that the supply of power from the system power supply is performed.

The control unit included in the illumination apparatus according to the exemplary embodiment performs discharging from the battery to the system power supply when the determination unit determines that the supply of power from the system power supply is not performed.

In the illumination apparatus according to the exemplary embodiment, if the setting information of the light source includes information indicating that the light source is turned on when the supply of power from the system power supply is not performed, power is supplied to the light source from the battery, and, if the setting information of the light source includes information indicating that the light source is not turned on when the supply of power from the system power supply is not performed, discharging is performed from the battery to the system power supply.

The light source included in the illumination apparatus according to the exemplary embodiment includes a first light source and a second light source, and the illumination circuit controls the first light source and the second light source based on the setting information of the light source.

An illumination system according to an exemplary embodiment includes the illumination apparatus according to the exemplary embodiment. The illumination system according to the exemplary embodiment includes a management apparatus that performs illumination control of the illumination apparatus.

The management apparatus of the illumination system according to the exemplary embodiment transmits the setting information of the light source to the illumination apparatus in an emergency.

An illumination apparatus control method according to an exemplary embodiment includes monitoring power supplied from the system power supply and determining whether or not the supply of power from the system power supply is performed. The illumination apparatus control method according to the exemplary embodiment includes controlling supply of power to a light source from a battery based on setting information of the light source when it is determined that the supply of power from the system power supply is not performed.

In the illumination apparatus control method according the exemplary embodiment, in the controlling of the supply of power, power is supplied to an illumination circuit and the battery from the system power supply when it is determined that the supply of power from the system power supply is performed.

In the illumination apparatus control method according to the exemplary embodiment, discharging is performed from the battery to the system power supply when it is determined that the supply of power from the system power supply is not performed.

The illumination apparatus control method according to the exemplary embodiment further includes receiving the setting information of the light source from a management apparatus in an emergency.

Hereinafter, an illumination system according to an exemplary embodiment will be described in detail with reference to the drawings.

### Example of configuration of illumination system 1

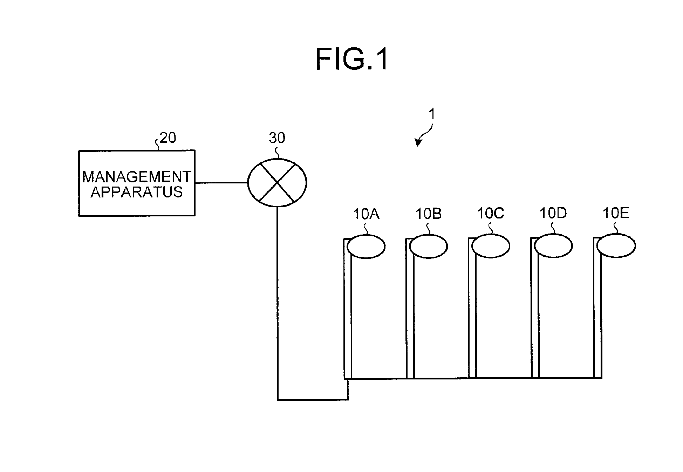

FIG. 1 is a diagram illustrating an outline of an example of an illumination system according to an exemplary embodiment. With reference to FIG. 1, an example of the illumination system according to the exemplary embodiment will be described. The illumination system 1 according to the exemplary embodiment shown in FIG. 1 includes a plurality of illumination apparatuses 10A to 10E and a management apparatus 20. The management apparatus 20 is connected to the illumination apparatuses 10A to 10E via a network 30, and controls operations such as lighting-up, lighting-out, blinking, dimming, and toning through communication with the respective illumination apparatuses 10A to 10E. In addition, the management apparatus 20 transmits setting information of a light source to the illumination apparatuses 10A to 10E in an emergency. The network 30 may use, for example, power line communication (PLC), and may be any network such as the Internet, a local area network (LAN), or a wide area network (WAN).

The management apparatus 20 is, for example, a management server or the like which controls operations of a plurality of illumination apparatuses disposed in a predetermined region so as to manage and adjust power consumption by the illumination apparatuses in an integrated fashion. In addition, the management apparatus 20 may be a management server or the like installed in a smart city which manages power consumption in a region or a city in an integrated fashion. Further, the management apparatus 20 may be a apparatus which manages not only illumination apparatuses but also any apparatuses which are provided in a public space and is supplied with power for operation. Furthermore, the management apparatus 20 determines, in response to an evacuation route whether or not an evacuation light of an illumination apparatus is lighted, and transmits, to the illumination apparatus, an instruction for whether or not the evacuation light of the illumination apparatus is lighted.

The illumination apparatuses 10A to 10E are, for example, road lights which are installed on a road with any interval and illuminate the road, but are not limited thereto. Although five illumination apparatuses are shown in FIG. 1, the number thereof is not limited thereto, and any number of illumination apparatuses are provided on the road.

In addition, each of the illumination apparatuses 10A to 10E includes a night-light which illuminates a road at night as a first light source and an evacuation light for providing guidance to an evacuation route when a disaster occurs as a second light source. Further, each of the illumination apparatuses 10A to 10E has a battery mounted therein. Each of the illumination apparatuses 10A to 10E is operated by the supply of power from a system power supply in normal time and charges the battery. In addition, when the supply of power from the system power supply is cut off due to occurrence of a disaster, each illumination apparatus is operated by the supply of power charged in the battery. Furthermore, when the supply of power from the system power supply is cut off due to occurrence of a disaster, each illumination apparatus turns on normal road illumination, and the illumination apparatuses located at a route to an evacuation site of the region turn on the evacuation lights indicating the evacuation route. In addition, the illumination apparatuses 10A to 10E are indicated by the illumination apparatus 10 when a description is made without particular differentiation therebetween.

### Example of configuration of illumination apparatus 10

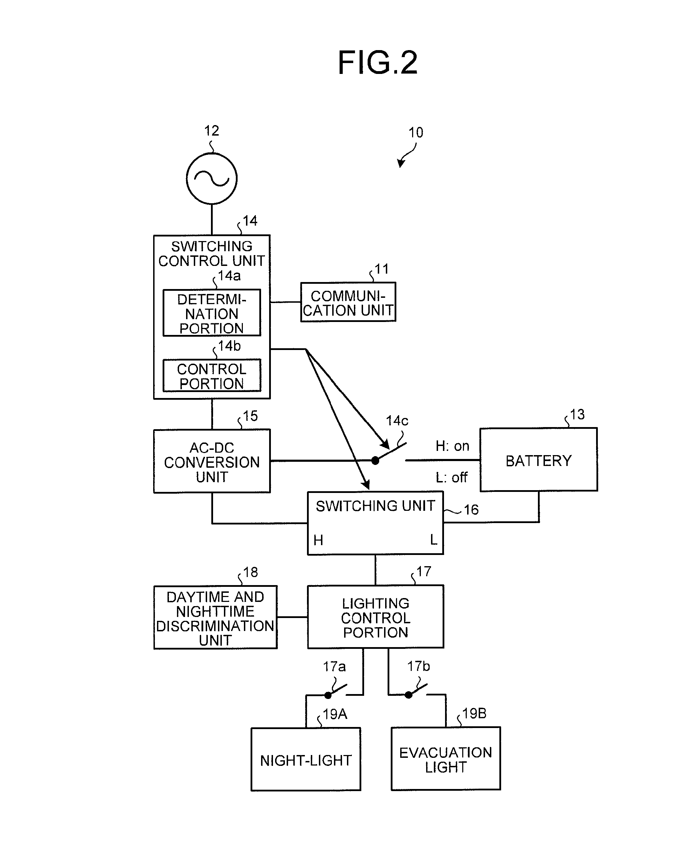

With reference to FIG. 2, a configuration of the illumination apparatus 10 will be described. FIG. 2 is a diagram illustrating an example of a configuration of the illumination apparatus. The illumination apparatus 10 includes a communication unit 11, a power supply unit 12, a battery 13, a switching control unit 14, an AC-DC conversion unit 15, a switching unit 16, a lighting control unit 17 which is an illumination circuit, and a daytime and nighttime discrimination unit 18, a night-light 19A, and an evacuation light 19B.

The communication unit 11 receives a control signal transmitted from the management apparatus 20. The communication unit 11 sends the received control signal to the lighting control unit 17, and causes the lighting control unit 17 to adjust an emission aspect of the night-light 19A or the evacuation light 19B. For example, the lighting control unit 17 turns on, turns off, or makes the night-light 19A or the evacuation light 19B blink, or varies an emitted color tone, illuminance, and the like thereof, based on the received control signal.

In addition, the communication unit 11 receives setting information of the light source from the management apparatus. The setting information of the light source is information regarding whether or not the light source is turned on, whether or not the night-light 19A is turned off and only the evacuation light 19B is turned on, whether or not only the night-light 19A is turned on and the evacuation light 19B is turned off, whether both of the night-light 19A and the evacuation light 19B are turned on or turned off, and whether or not the night-light 19A is turned on at a lower output state than in normal time, for example, in an emergency. For example, the illumination apparatus may be set to be turned on when the illumination apparatus is installed in an evacuation route, and may be set to be turned off when the illumination apparatus is installed at a place which is not an evacuation route.

The power supply unit 12 is supplied with AC power from the system, and supplies DC power converted by the AC-DC conversion unit 15, described later, to the night-light 19A or the evacuation light 19B. The battery 13 is charged by power from the system power supply. The battery 13 accumulates power in normal time, and supplies power to the night-light 19A or the evacuation light 19B when the supply of power is cut off during occurrence of a disaster or a power failure.

The switching control unit 14 monitors the power supplied from the power supply unit 12, and performs connection or disconnection of a power supply connection switch 14c depending on whether or not power is supplied from the system power supply. The switching control unit 14 includes a determination portion 14a and a control portion 14b. In addition, the switching control unit 14 is configured to be supplied with power from the battery 13 for operation in preparation to a case where the supply of power from the system power supply is cut off (not shown).

The determination portion 14a monitors power supplied from the system power supply, and whether or not the supply of power from the system power supply is performed. For example, the determination portion 14a monitors a power amount of power supplied from the system power supply, determines that the supply of power from the system power supply is performed if the power amount exceeds a predetermined threshold value, and determines that the supply of power from the system power supply is cut off if the power amount is equal to or less than the predetermined threshold value.

The control portion 14b supplies power from the system power supply to the lighting control unit 17 and the battery 13 when the determination portion 14a determines that the supply of power from the system power supply is performed. When the determination portion 14a determines that the supply of power from the system power supply is performed, the control portion 14b controls the switching unit 16 so as to be in an H state, that is, so as to connect the AC-DC conversion unit 15 to the lighting control unit 17, such that power from the system power supply is supplied to the lighting control unit 17, and power is also supplied to the battery 13 connected to the system power supply via the power supply connection switch 14c so as to charge the battery 13.

In addition, if the determination portion 14a determines that the supply of power from the system power supply is not performed, the control portion 14b controls supply of power to the night-light 19A or the evacuation light 19B from the battery 13 based on the setting information of the night-light 19A and the evacuation light 19B. For example, if the determination portion 14a determines that the supply of power from the system power supply is cut off, the control portion 14b controls the switching unit 16 so as to be in an L state, that is, so as to connect the lighting control unit 17 to the battery 13, such that power is supplied from the battery 13 to the lighting control unit 17. Further, in this case, the power supply connection switch 14c is preferably disconnected.

In addition, the control portion 14b performs discharging from the battery 13 to the system power supply when the determination portion 14a determines that the supply of power from the system power supply is not performed. For example, when the determination portion 14a determines that the supply of power from the system power supply is cut off, and the night-light 19A and the evacuation light 19B are not turned on, the control portion 14b controls the battery 13 so as to discharge power. For example, the control portion 14b turns off the power supply connection switch 14c, and sends an instruction to the switching unit 16 so as to be in an HL state, thereby connecting the battery 13 to the AC-DC conversion unit 15. At this time, the lighting control unit 17 is disconnected from the AC-DC conversion unit 15 and the battery 13.

The AC-DC conversion unit 15 rectifies the AC power supplied from the system power supply via the power supply unit 12 so as to be converted into DC power which is supplied to the battery 13 and the switching unit 16. In addition, the AC-DC conversion unit 15 converts DC power supplied from the battery 13 into AC power which is discharged via the power supply unit 12.

The switching unit 16 controls the night-light 19A and the evacuation light 19B. The switching unit 16 switches connections between the AC-DC conversion unit 15, the battery 13, and the lighting control unit 17, based on an instruction from the switching control unit 14. In other words, when the switching unit 16 is in an H state, the AC-DC conversion unit 15 is connected to the lighting control unit 17, and the battery 13 is disconnected from the lighting control unit. On the other hand, when the switching unit 16 is in an L state, the battery 13 is connected to the lighting control unit, and the AC-DC conversion unit 15 is disconnected from the lighting control unit 17. In addition, when the switching unit 16 is in an HL state, the battery 13 is connected to the lighting control unit, and the lighting control unit 17 is disconnected from the AC-DC conversion unit 15 and the battery 13. For example, in normal time when power is supplied from the system power supply, the switching unit 16 connects the AC-DC conversion unit 15 to the lighting control unit 17 such that power is supplied to the night-light 19A or the evacuation light 19B from the system power supply.

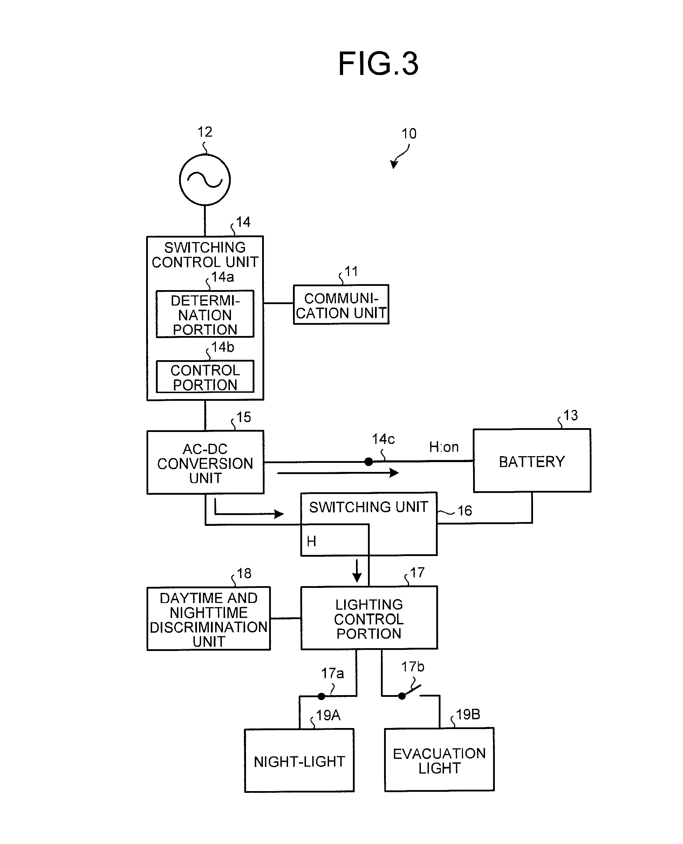

FIG. 3 is a diagram illustrating the supply of power to the night-light in normal time. As shown in FIG. 3, in normal time when power is supplied from the system power supply, the AC-DC conversion unit 15 is connected to the lighting control unit 17 such that power is supplied to the lighting control unit 17 from the system power supply. In addition, as shown in FIG. 3, in normal time, the power supply connection switch 14c is turned on, and thus the battery 13 is charged with power from the system power supply. For this reason, in normal time, it is possible to charge the battery in preparation to occurrence of a disaster.

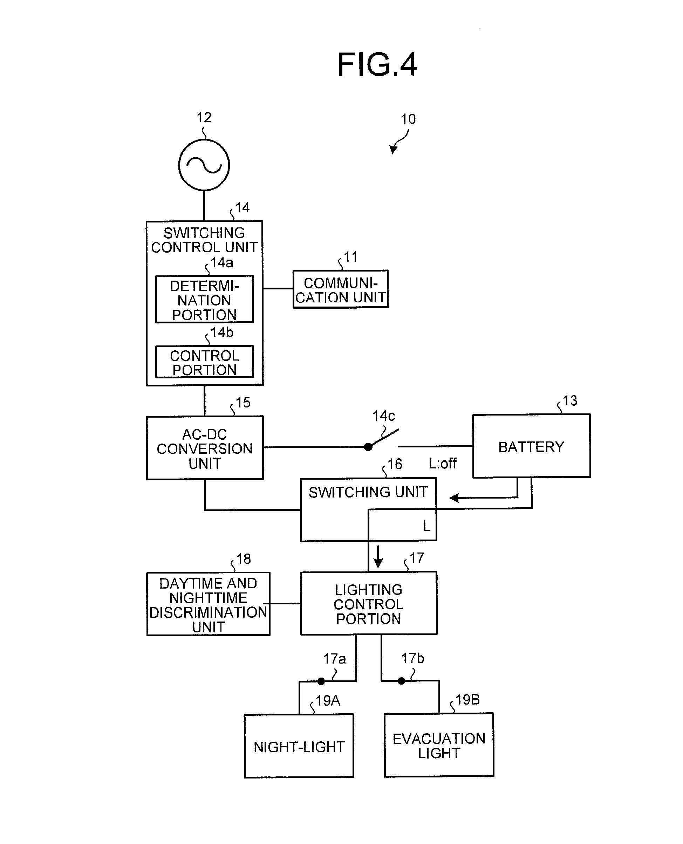

In addition, the switching unit 16 disconnects the AC-DC conversion unit 15 from the lighting control unit 17 and connects the battery 13 to the lighting control unit 17 when the supply of power from the system power supply is cut off. FIG. 4 is a diagram illustrating the supply of power to the evacuation light or night-light when the supply of power from the system power supply is cut off. As shown in FIG. 4, when the supply of power from the system power supply is cut off, the switching unit 16 disconnects the AC-DC conversion unit 15 from the lighting control unit 17, and connects the battery 13 to the lighting control unit 17, such that power is supplied from the battery 13 to the night-light 19A or the evacuation light 19B. Thus, even when the supply of power from the system power supply is cut off, it is possible to turn on the night-light 19A or the evacuation light 19B with the power charged in the battery.

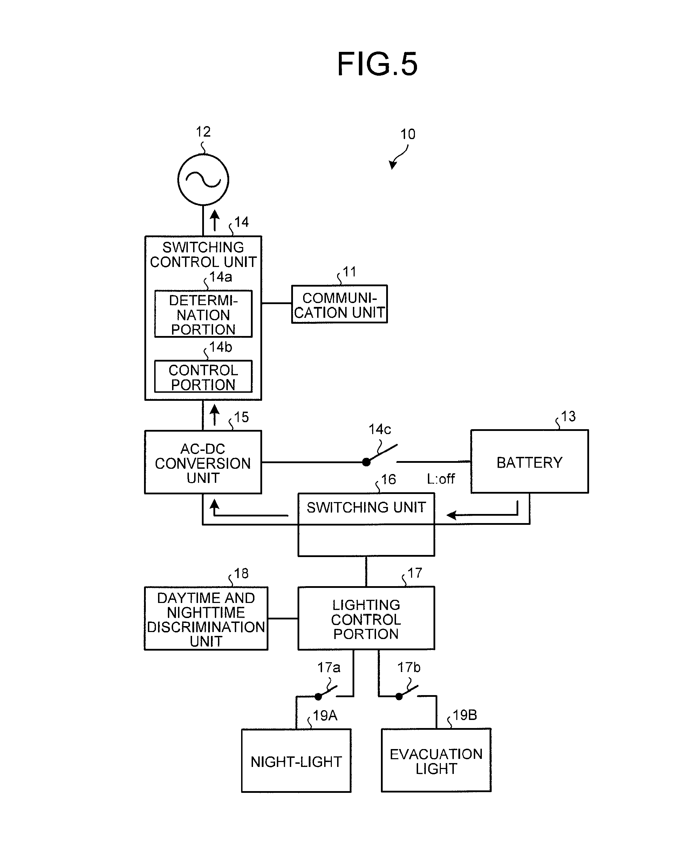

Further, when the supply of power from the system power supply is cut off, and both of the night-light 19A and the evacuation light 19B are not turned on, the switching unit 16 disconnects the AC-DC conversion unit 15 from the lighting control unit 17, and connects the battery 13 to the AC-DC conversion unit 15. FIG. 5 is a diagram illustrating discharging of the battery when the supply of power from the system power supply is cut off and the evacuation light is not turned on. As shown in FIG. 5, when the supply of power from the system power supply is cut off and the evacuation light 19B is not turned on, the switching unit 16 disconnects the AC-DC conversion unit 15 from the lighting control unit 17, and connects the battery 13 to the AC-DC conversion unit 15, thereby discharging power of the battery to outside via the power supply unit 12. Thus, it is possible to supply power charged in the battery to other illumination apparatuses of which power is insufficient.

The lighting control unit 17 controls the night-light 19A and the evacuation light 19B based on the setting information of the light source. If the daytime and nighttime discrimination unit 18 discriminates the daytime, the lighting control unit 17 controls a night-light switch 17a so as to be disconnected, thereby turning off the night-light 19A, and if the daytime and nighttime discrimination unit 18 discriminates the nighttime, the lighting control unit controls the night-light switch 17a so as to be connected, thereby turning on the night-light 19A with the supply of power from the system power supply or the supply of power from the battery 13.

In addition, when the supply of power from the system power supply is performed, the lighting control unit 17 disconnects an evacuation light switch 17b so as to turn off the evacuation light 19B, and when the supply of power from the system power supply is cut off, the lighting control unit controls the night-light 19A and the evacuation light 19B based on the setting information of the light source. For example, the evacuation light switch 17b is controlled so as to be connected, thereby turning on the evacuation light 19B with the supply of power from the battery 13. In other words, if the setting information of the light source includes information indicating that the light source is turned on when the supply of power from the system power supply is cut off, power is supplied to the light source from the battery 13. In addition, if the setting information of the light source includes information indicating that the light source is not turned off when the supply of power from the system power supply is cut off, discharging is performed from the battery 13 to the system power supply.

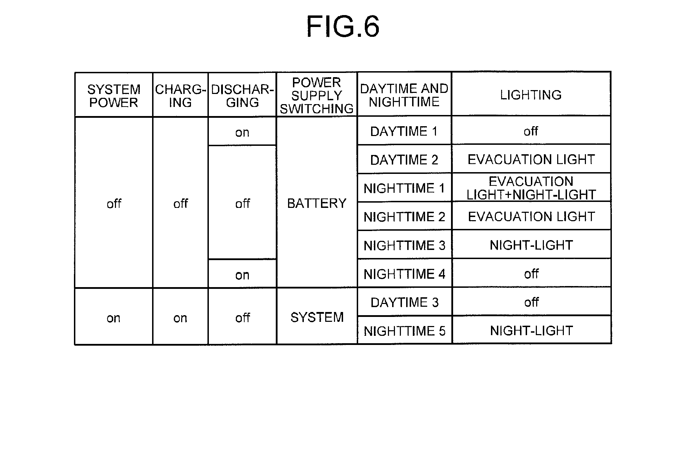

FIG. 6 is a diagram illustrating control performed by the switching control unit 14 and the lighting control unit 17. As shown in FIG. 6, when the system power supply is in an OFF state, that is, the supply of power from the system power supply is cut off, charging of the battery 13 enters an OFF state, and thus the switching control unit 14 switches a power supply to the battery 13. In this case, the lighting control unit 17 turns on the evacuation light 19B in the daytime 1, and turns off the night-light 19A and the evacuation light 19B and sets discharging to an ON state in the daytime 2. In the nighttime 1, both of the evacuation light 19B and the night-light 19A are turned on. In the nighttime 2, only the evacuation light 19B is turned on, and, only the night-light 19A is turned on in the nighttime 3. In the nighttime 4, the night-light 19A and the evacuation light 19B are turned off, and discharging is set to an ON state. In addition, as described later, the illumination apparatus determines whether or not the night-light 19A and the evacuation light 19B are targets to be turned on, and are turned on only if it is determined that the night-light and the evacuation light are targets to be turned on.

Further, as shown in FIG. 6, the switching control unit 14 sets charging of the battery 13 to an ON state and switches a power supply to the system power supply when the system power supply is in an ON state, that is, the supply of power from the system power supply is performed. In this case, the lighting control unit 17 turns off the night-light 19A and the evacuation light 19B in the daytime 3, and turns on the night-light 19A in the nighttime 5.

When the supply of power from the system power supply is cut off, the switching control unit 14 performs control such that it is determined whether or not the night-light 19A and the evacuation light 19B of the illumination apparatus are targets to be turned on, and power is supplied to the lighting control unit 17 from the battery 13 only if it is determined that the night-light and the evacuation light are targets to be turned on. In other words, this is because the night-light 19A or the evacuation light 19B is a light for providing guidance to an evacuation route, and thus the illumination apparatus 10 which is not located in the evacuation route is not required to be turned on.

For example, when the supply of power from the system power supply is cut off, the switching control unit 14 connects the lighting control unit 17 to the battery 13 if an instruction for turning on the evacuation light is received via the communication unit 11, and disconnects the lighting control unit 17 from the battery 13 if an instruction for not turning on the evacuation light 19B is received. Alternatively, if the evacuation light 19B is turned off, control may be performed such that the evacuation light switch 17b is disconnected and thus the evacuation light 19B is turned off. In other words, for example, if an earthquake disaster occurs, evacuation sites or evacuation routes are different depending on a peripheral situation of damage, and thus the evacuation light 19B is turned on or off in response to an instruction from the higher-rank management apparatus 20.

In addition, whether or not the night-light 19A or the evacuation light 19B of the illumination apparatus is a target to be turned on may be set in each illumination apparatus 10 in advance. For example, if information indicating that the night-light 19A or the evacuation light 19B of the illumination apparatus to be turned on is set in advance when the supply of power from the system power supply is cut off, the lighting control unit 17 performs control such that the battery 13 is connected to the lighting control unit 17, the night-light switch 17a or the evacuation light switch 17b is connected, and thus the night-light 19A or the evacuation light 19B is turned on. In addition, if information indicating that the night-light 19A and the evacuation light 19B of the illumination apparatus are not turned on is set in advance, control is performed such that the supply of power from the battery 13 to the lighting control unit 17 is cut off, or the night-light switch 17a and the evacuation light switch 17b are disconnected so as to turn off the evacuation light 19B. In other words, since evacuation sites or evacuation routes are determined in advance by local governments or municipalities in most cases, whether or not the night-light 19A or the evacuation light 19B is turned on may be set in advance. Further, whether or not the night-light 19A or the evacuation light 19B of the illumination apparatus is a target to be turned on may be set in advance, and an instruction for changing targets to be turned on may be received from the management apparatus 20 if evacuation sites or evacuation routes are changed.

The daytime and nighttime discrimination unit 18 includes an illuminance sensor and the like, detects an extent of ambient brightness, and determines whether or not the detected extent of brightness is equal to or more than a predetermined threshold value. In addition, as a result of the determination, the daytime and nighttime discrimination unit 18 discriminates the daytime if the extent of brightness is equal to or more than the predetermined threshold value, and discriminates the nighttime if the extent of brightness is less than the threshold value. In addition, the daytime and nighttime discrimination unit sends the discrimination result to the lighting control unit 17.

The night-light 19A is a light for illuminating a road when a night comes and it is dark. The evacuation light 19B is a guidance light for providing the victims with guidance to an evacuation site or an evacuation route when a disaster or the like occurs. However, there may be an aspect in which only the night-light 19A is provided, and the night-light 19A is used as the evacuation light 19B. The night-light 19A and the evacuation light 19B are constituted by light emitting diodes or fluorescent lights, and are turned on and off and are dimmed under the control of the lighting control unit 17.

### Example of flow of illumination control process

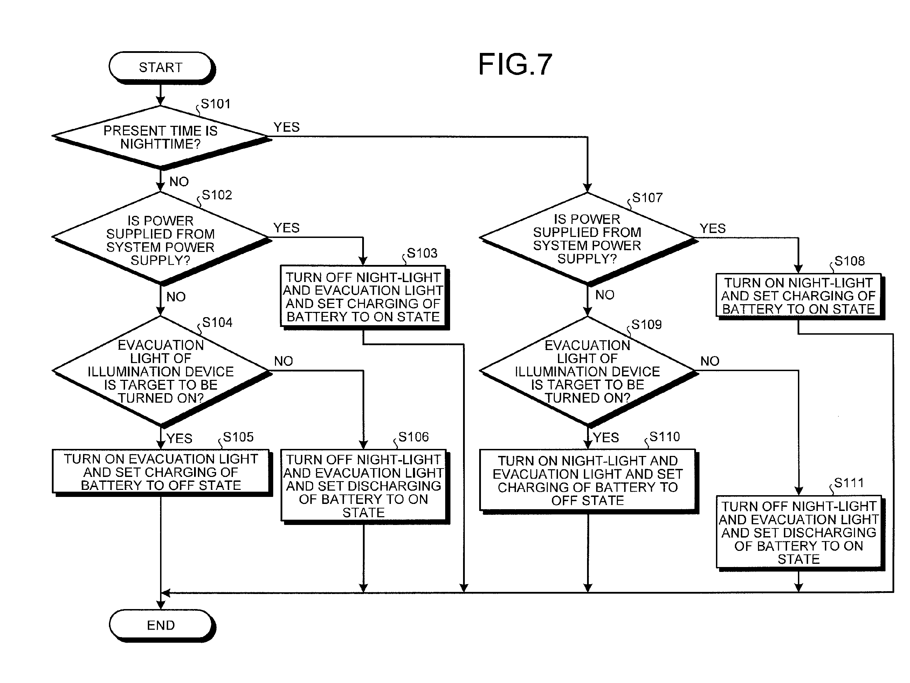

FIG. 7 is a flowchart illustrating an example of a flow of an illumination control process in the illumination apparatus 10 according to the exemplary embodiment. With reference to FIG. 7, a description will be made of an example of a flow of an illumination control process in the illumination apparatus 10.

First, the daytime and nighttime discrimination unit 18 of the illumination apparatus 10 discriminates whether or not the present time is the nighttime (Act 101). As a result, if the daytime and nighttime discrimination unit 18 determines that the present time is not the nighttime (negative in Act 101), the determination portion 14a determines whether or not the supply of power from the system power supply is performed (Act 102). In addition, if the determination portion 14a determines that the supply of power from the system power supply is performed (affirmative in Act 102), the lighting control unit 17 performs control so as to turn off the night-light 19A and the evacuation light 19B, the switching control unit 14 performs control so as to set charging of the battery 13 to an ON state (Act 103).

In addition, if the determination portion 14a determines that power is not being supplied from the system power supply (negative in Act 102), the lighting control unit 17 determines whether or not the evacuation light 19B of the illumination apparatus is a target to be turned on (Act 104). As a result, if it is determined that the evacuation light 19B of the illumination apparatus is a target to be turned on (affirmative in Act 104), the lighting control unit 17 performs control so as to turn on the evacuation light 19B, and the switching control unit 14 performs control so as to set charging of the battery to an OFF state (Act 105). Further, if it is determined that the evacuation light 19B of the illumination apparatus is not a target to be turned on (negative in Act 104), the lighting control unit 17 performs control so as to turn off the night-light 19A and the evacuation light 19B, and the switching control unit 14 performs control so as to set discharging of the battery to an ON state (Act 106).

In addition, if the daytime and nighttime discrimination unit 18 discriminates that the present time is the nighttime in Act 101 (affirmative in Act 101), the determination portion 14a determines whether or not the supply of power from the system power supply is performed (Act 107). Further, if the determination portion 14a determines that the supply of power from the system power supply is performed (affirmative in Act 107), the lighting control unit 17 performs control so as to turn on the night-light 19A, and the switching control unit 14 performs control so as to set charging of the battery 13 to an ON state (Act 108).

In addition, if the determination portion 14a determines that power is not being supplied from the system power supply (negative in Act 107), the lighting control unit 17 determines whether or not the evacuation light 19B of the illumination apparatus is a target to be turned on (Act 109). As a result, if it is determined that the evacuation light 19B of the illumination apparatus is a target to be turned on (affirmative in Act 109), the lighting control unit 17 performs control so as to turn on the night-light 19A and the evacuation light 19B, and the switching control unit 14 performs control so as to set charging of the battery to an OFF state (Act 110). Further, if it is determined that the evacuation light 19B of the illumination apparatus is not a target to be turned on (negative in Act 109), the lighting control unit 17 performs control so as to turn off the night-light 19A and the evacuation light 19B, and the switching control unit 14 performs control so as to set discharging of the battery to an ON state (Act 111). The illumination control process finishes through these procedures.

### Effects of exemplary embodiment

As above, in the illumination system 1 according to the exemplary embodiment, the illumination apparatus 10 monitors power supplied from the system power supply, and determines whether the supply of power is preformed or the supply of power is cut off from the system power supply. In addition, if it is determined that the supply of power from the system power supply is performed, the illumination apparatus 10 supplies power from the system power supply to the night-light 19A or the evacuation light 19B, and also supplies the power to the battery 13 connected to the system power supply via the power supply connection switch 14c so as to charge the battery 13. In addition, if it is determined that the supply of power from the system power supply is cut off, the illumination apparatus disconnects the power supply connection switch 14c so as to isolate the battery 13 from the system power supply, thereby supplying power to the night-light 19A or the evacuation light 19B from the battery 13. For this reason, even if the supply of power from the system power supply is cut off during occurrence of a disaster or a power failure, the illumination apparatus 10 can maintain functions thereof, and can illuminate a road with sufficient illuminance even in the nighttime.

Further, in the illumination system 1 according to the exemplary embodiment, control is performed such that, if it is determined that the supply of power from the system power supply is performed, the illumination apparatus 10 disconnects the evacuation light switch 17b so as to turn off the evacuation light 19B, and if it is determined that the supply of power from the system power supply is cut off, the illumination apparatus connects the evacuation light switch 17b to the battery 13 so as to turn on the evacuation light 19B. For this reason, the illumination apparatus 10 located in a route to an evacuation site of a region turns on the evacuation light 19B indicating the evacuation route so as to indicate the evacuation route to the evacuation site, thereby performing prompt evacuation.

In addition, in the illumination system 1 according to the exemplary embodiment, the illumination apparatus 10 receives an instruction for whether or not the evacuation light 19B is turned on from the management apparatus 20. Further, when it is determined that the supply of power from the system power supply is cut off, if an instruction for turning on the evacuation light 19B is received, the illumination apparatus 10 performs control such that the evacuation light switch 17b is connected to the battery 13 so as to turn on the evacuation light 19B, and, if an instruction for not turning on the evacuation light 19B is received, the illumination apparatus performs control such that the evacuation light switch 17b is disconnected so as to turn off the evacuation light 19B. For example, if an earthquake disaster occurs, evacuation sites or evacuation routes are different depending on a peripheral situation of damage, and thus the illumination apparatus 10 can turn on or off the evacuation light 19B in response to an instruction from the higher-rank management apparatus 20.

In addition, in the illumination system 1 according to the exemplary embodiment, when it is determined that the supply of power from the system power supply is cut off, if information indicating that the evacuation light 19B of the illumination apparatus is turned on is set in advance, the illumination apparatus 10 performs control such that the evacuation light switch 17b is connected to the battery 13 so as to turn on the evacuation light 19B, and, if information indicating that the evacuation light 19B of the illumination apparatus is not turned on is set in advance, the illumination apparatus 10 performs control such that the evacuation light switch 17b is disconnected so as to turn off the evacuation light 19B. For example, since evacuation sites or evacuation routes are determined in advance by local governments or municipalities in most cases, the illumination apparatus 10 can turn on or off the evacuation light 19B based on the information set in advance.

Further, in the illumination system 1 according to the exemplary embodiment, if the supply of power from the system power supply is determined to be cut off, and neither of the night-light 19A and the evacuation light 19B are turned on, the illumination apparatus 10 performs control such that power of the battery 13 is discharged. Thus, it is possible to supply power charged in the battery to other illumination apparatuses of which power is insufficient.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. An illumination apparatus (10) comprising:
a light source (19A, 19B);
an illumination circuit (17) that controls the light source (19A, 19B);
a battery (13) that is charged with power from a system power supply;
a determination unit (14a) that monitors power supplied from the system power supply and determines whether or not the supply of power from the system power supply is performed;
a control unit (14b) that controls supply of power to the light source (19A, 19B) from the battery (13) based on setting information of the light source (19A, 19B) when the determination unit (14a) determines that the supply of power from the system power supply is not performed.

2. The apparatus (10) according to claim 1, wherein the control unit (14b) supplies power to the illumination circuit (17) and the battery (13) from the system power supply when the determination unit (14a) determines that the supply of power from the system power supply is performed.

3. The apparatus (10) according to claim 1 or 2, wherein the control unit (14b) performs discharging from the battery (13) to the system power supply when the determination unit (14a) determines that the supply of power from the system power supply is not performed.

4. The apparatus (10) according to any one of claims 1 to 3, wherein, if the setting information of the light source (19A, 19B) includes information indicating that the light source is turned on when the supply of power from the system power supply is not performed, power is supplied to the light source (19A, 19B) from the battery (13), and, if the setting information of the light source includes information indicating that the light source is not turned on when the supply of power from the system power supply is not performed, discharging is performed from the battery (13) to the system power supply.

5. The apparatus (10) according to any one of claims 1 to 4, wherein the light source (19A, 19B) includes a first light source (19A) and a second light source (19B), and
wherein the illumination circuit (17) controls the first light source (19A) and the second light source (19B) based on the setting information of the light source (19A, 19B).

6. An illumination system (1) comprising:
the illumination apparatus (10) according to any one of claims 1 to 5; and
a management apparatus (20) that performs illumination control of the illumination apparatus (10).

7. The system (1) according to claim 6,
wherein the management apparatus (20) transmits the setting information of the light source (19A, 19B) to the illumination apparatus (10) in an emergency.

8. An illumination apparatus control method comprising:
monitoring power supplied from the system power supply and determining whether or not the supply of power from the system power supply is performed; and
controlling supply of power to a light source (19A, 19B) from a battery (13) based on setting information of the light source (19A, 19B) when it is determined that the supply of power from the system power supply is not performed.

9. The method according to claim 8, wherein, in the controlling of the supply of power, power is supplied to the illumination circuit (17) and the battery (13) from the system power supply when it is determined that the supply of power from the system power supply is performed.

10. The method according to claim 8 or 9, wherein discharging is performed from the battery (13) to the system power supply when it is determined that the supply of power from the system power supply is not performed.

11. The method according to any one of claims 8 to 10, further comprising:
receiving the setting information of the light source (19A, 19B) from the management apparatus (20) in an emergency.
